# EUROPEAN PATENT APPLICATION

(11) **EP 4 847 823 A1**
(43) Date of publication of application: **02.12.2026**
(21) Application number: 26182116.9
(22) Date of filing: 29.05.2026
(51) Int. Cl.: F16N 39/06, F01D 25/18, F01M 11/03, F01M 11/08, F16N 39/00

(54) **PIPING CONFIGURATION TO ACCOMMODATE FLOW AND RETURN OF OIL FROM THE ENTRANCE OF THE OIL TANK AND EXIT FROM THE OIL DEBRIS MONITOR**

(30) Priority: 29.05.2025 US 202519222743
(71) Applicant: RTX Corporation, Farmington, CT 06032 (US)
(72) Inventor: HAYE, Sheridon, College Station 77845 (US); SETO, Danbing, Avon 06001 (US); HALDEMAN, Charles W., Simsbury 06070 (US); PARNIN, Francis, Sheffield 01257 (US)
(74) Representative: Dehns

(57) **Abstract**

An apparatus comprising a particle separator (106) configured to separate particles from lubricating oil on a gas turbine engine (102). An oil debris monitor, ODM, sensor (204) is integrated within the particle separator (106). An input (110) to the particle separator (106) is configured to connect the particle separator (106) to receive the lubricating oil from an engine oil scavenge sub-system of the gas turbine engine (102). A first output (114) from the particle separator (106) is configured to connect the particle separator (106) to provide the lubricating oil to an oil tank (104) associated with the gas turbine engine (102). A second output (116) from the particle separator (106) is configured to connect the particle separator (106) to provide the lubricating oil to the oil tank (104) associated with the gas turbine engine (102) from the ODM sensor (204). The second output (116) has a smaller diameter than the first output (114).

## Description

### TECHNICAL FIELD

This invention relates generally to a system for detecting particulate matter size within oil provided to a gas turbine engine. More specifically, this invention relates to detecting particulate matter size within a separate oil feed line provided to an oil tank of a gas turbine engine.

### BACKGROUND

The ODM sensor system consists of the ODM sensor integrated with a particle separator. This combination effectively improves the sensitivity of the system to detect smaller particles without the deleterious effect of back pressure due to smaller bore. The ability of such a system is to be installed retroactively on existing platforms with minimum effect on the functionality of the system would be greatly beneficial. The combined sensing system would need to be mounted to allow the connection of primary oil flow lines to accommodate the insertion of the device where the oil from the engine enters the particle sorting device which performs the task of sorting the particles and before passing them through a small bore ODM for detection. Oil with sorted particles is then returned to the main tank for use in the normal operation of the engine.

### SUMMARY

This invention relates to a system and method for detecting particle size within lubricating oil of a gas turbine engine.

According to an aspect of the present invention, an apparatus includes a particle separator configured to separate particles from lubricating oil on a gas turbine engine, an oil debris monitor (ODM) sensor integrated within the particle separator, an input to the particle separator configured to connect the particle separator to receive the lubricating oil from an engine oil scavenge sub-system of the gas turbine engine, a first output from the particle separator configured connect the particle separator to provide the lubricating oil to an oil tank associated with the gas turbine engine and a second output from the particle separator configured to connect the particle separator to provide the lubricating oil to the oil tank associated with the gas turbine engine from the ODM sensor, where in the second output has a smaller diameter than the first output.

Any single one or any combination of the following features may be used with the examples above.

Optionally, and in accordance with the above, the apparatus may include a first output line connected between the first output configured to provide the lubricating oil to the first output and the oil tank associated with the gas turbine engine.

Optionally, and in accordance with any of the above, the apparatus may include a second output line connected between the second output and the oil tank.

Optionally, and in accordance with any of the above, the second output line has a diameter smaller than the first output line.

Optionally, and in accordance with any of the above, the diameter of the second output line does not cause unacceptable backflow pressure within the second output line.

Optionally, and in accordance with any of the above, the ODM sensor may include a small bore ODM sensor for detecting particles in a concentrated particle flow within the particle separator.

Optionally, and in accordance with any of the above, the particle separator is installed retroactively with the gas turbine engine and the oil tank of the gas turbine engine.

Optionally, and in accordance with any of the above, the apparatus may include a third output from the particle separator configured connect the particle separator to provide separated air to an auxiliary gear box associated with the gas turbine engine.

According to another aspect of the present invention, a system includes a gas turbine engine having an engine oil scavenge sub-system, an oil tank configured to store lubricating oil for the gas turbine engine, an auxiliary gear box associated with the gas turbine engine. The system also includes a particle separator configured to separate particles from lubricating oil on the gas turbine engine, an oil debris monitor (ODM) sensor integrated within the particle separator, an input to the particle separator configured to connect the particle separator to receive the lubricating oil from the engine oil scavenge sub-system of the gas turbine engine, a first output from the particle separator configured to connect the particle separator to provide the lubricating oil to the oil tank associated with the gas turbine engine and a second output from the particle separator configured to connect the particle separator to provide the lubricating oil to the oil tank associated with the gas turbine engine from the ODM sensor, where in the second output has a smaller diameter than the first output.

Any single one or any combination of the following features may be used with the examples above.

Optionally, and in accordance with the above, the system may include a first output line connected between the first output configured to provide the lubricating oil to the first output and the oil tank associated with the gas turbine engine.

Optionally, and in accordance with any of the above, the apparatus may include a second output line connected between the second output and the oil tank.

Optionally, and in accordance with any of the above, the second output line has a diameter smaller than the first output line.

Optionally, and in accordance with any of the above, the diameter of the second output line does not cause unacceptable backflow pressure within the second output line.

Optionally, and in accordance with any of the above, the ODM sensor may include a small bore ODM sensor for detecting particles in a concentrated particle flow within the particle separator.

Optionally, and in accordance with any of the above, the particle separator is installed retroactively with the gas turbine engine and the oil tank of the gas turbine engine.

Optionally, and in accordance with any of the above, the system may include an auxiliary gear box associated with the gas turbine engine, and a third output from the particle separator configured connect the particle separator to provide separated air to the auxiliary gear box associated with the gas turbine engine.

According to another aspect of the present invention, a method includes connecting a particle separator having an integrated oil debris monitor (ODM) sensor to receive lubricating oil from an engine oil scavenge sub-system of a gas turbine engine, connecting the particle separator having the integrated ODM sensor to provide the lubricating oil to an oil tank associated with the gas turbine engine using a first output and connecting the particle separator to provide the lubricating oil to the oil tank associated with the gas turbine engine from the ODM sensor using a second output, where in the second output has a smaller diameter than the first output.

Any single one or any combination of the following features may be used with the examples above.

Optionally, and in accordance with the above, the method may include connecting a first output line between the first output and the oil tank associated with the gas turbine engine.

Optionally, and in accordance with any of the above, the method may include connecting a second output line connected between the second output and the oil tank.

Optionally, and in accordance with any of the above, the second output line has a diameter smaller than the first output line.

Optionally, and in accordance with any of the above, the diameter of the second output line does not cause unacceptable backflow pressure within the second output line.

Optionally, and in accordance with any of the above, the method may include installing the particle separator with the gas turbine engine and the oil tank of the gas turbine engine.

Optionally, and in accordance with any of the above, the method may include connecting a third output from the particle separator to provide separated air to an auxiliary gear box associated with the gas turbine engine.

Other technical features may be readily apparent to one skilled in the art from the following figures, descriptions, and claims.

### BRIEF DESCRIPTION OF THE DRAWINGS

For a more complete understanding of this invention and its advantages, reference is now made to the following description taken in conjunction with the accompanying drawings, in which like reference numerals represent like parts:
Figure 1 illustrates a block diagram of an implementation for providing smaller bore ODM sensor detection for oil being provided to an oil tank of an engine lubrication system;
Figure 2 illustrates a more detailed block diagram more fully describing the separator module of Figure 1;
Figure 3 illustrates an alternative embodiment of a system for providing smaller bore ODM sensor detection for oil being provided to an oil tank of an engine lubrication system;
Figure 4 illustrates a block diagram of one implementation for installing the separator module with an existing separator/deaerator; and
Figure 5 illustrates a flow diagram of the operation of the system for providing smaller bore ODM sensor detection for oil being provided to an oil tank of an engine lubrication system.

### DETAILED DESCRIPTION

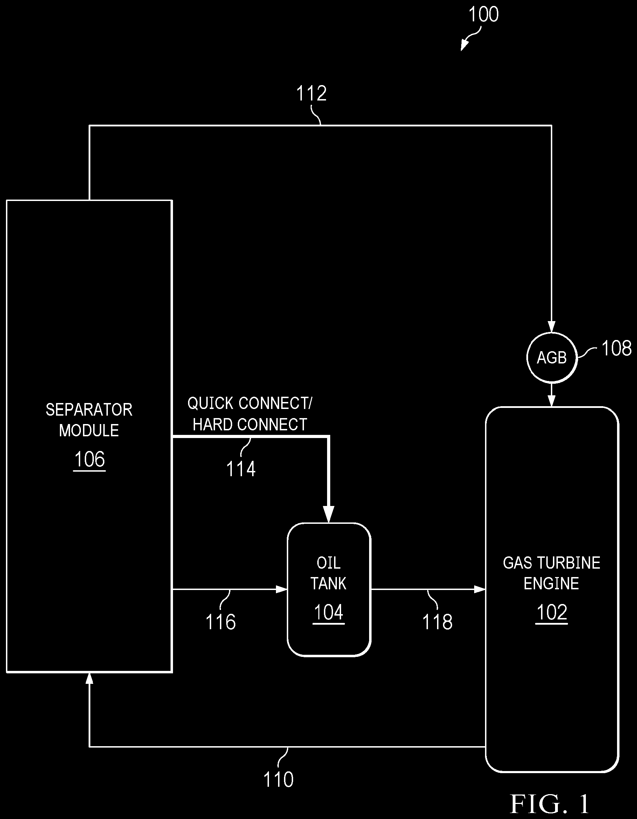

Figures 1 through 5, described below, and the various embodiments used to describe the principles of the present invention are by way of illustration only and should not be construed in any way to limit the scope of this invention. Those skilled in the art will understand that the principles of the present invention may be implemented in any type of suitably arranged device or system.

The ODM sensor system consists of the ODM sensor integrated with a particle separator. This combination effectively improves the sensitivity of the system to detect smaller particles without the deleterious effect of back pressure due to smaller bore. The system is to be installed retroactively on existing platforms with minimum effect on the functionality of the system. The combined sensing system must be mounted to allow the connection of primary oil flow lines to accommodate the insertion of the device where the oil from the engine enters the particle sorting device which performs the task of sorting the particles and then pass them through the small bore ODM for detection. Oil with sorted particles is then returned to the main tank for use in the normal operation of the engine.

Figure 1 illustrates a block diagram of an implementation for providing smaller bore ODM sensor detection for oil being provided to an oil tank of an engine lubrication system. The engine lubrication system 100 includes a gas turbine engine 102, an oil tank 104, separator module 106 and auxiliary gearbox (AGB) 108. Lubricating oil from the engine scavenge oil sub-system of the gas turbine engine 102 is provided to a separator module 106 via line 110. The lubricating oil within the line 110 that is provided to the separator module 106 will include air and particulate matters that need to be removed in order to make the lubrication oil useful for continued use by the gas turbine engine 102. The connection of line 110 to the separator module 106 may be via a quick connect connector or more permanent connector depending upon the needs for the particular application.

The separator module 106 performs a number of functions with respect to the lubricating oil provided via line 110. The separator module 106 will both separate air and concentrate a substantial number of particles from the lubricating oil provided via line 110 as will be more fully described herein below. The lubricating oil with concentrated particulate having separated air therefrom is analyzed within the separator module 106 to determine an amount of particulates within the lubricating oil. The configuration of the separator module 106 ensures a required pressure profile, flow rate and pressure Delta to ensure concentration of particles within the lubricating oil. The configuration further provides acceptable back-pressure and returns the lubricating oil back to the flow field at the oil tank 104.

The separator module 106 includes a single input from line 110 to receive the lubricating oil from the gas turbine engine 102. The separator module 106 also includes three separate outputs. A first output is provided to line 112 that provides the air removed by the separator module 106 back to the AGB 108. A pair of outputs from the separator module 106 provides lubricating oil having separated air and particles on lines 114 and 116. The lines 114 and 116 provide lubricating oil that has been cleaned back to the oil tank 104. Line 114 is an output of the separator module 106 and provides lubricating oil directly to the oil tank 104. Line 116 contains particle concentrated lubricating oil flow that has been analyzed to detect particle sizes contained therein. The lubricating oil directed to the oil tank 104 over lines 114 and 116 is then directed back to the gas turbine engine 102 through line 118 and recirculated through the lubrication system. A sufficient pressure differential must be established and maintained to ensure the adequate flow of particle containing lubricating oil through the separator module 106 and back to the oil tank 104 without relying on gravity flow. The air removed by the separator module 106 is provided from the separator module to the AGB 108 through line 112.

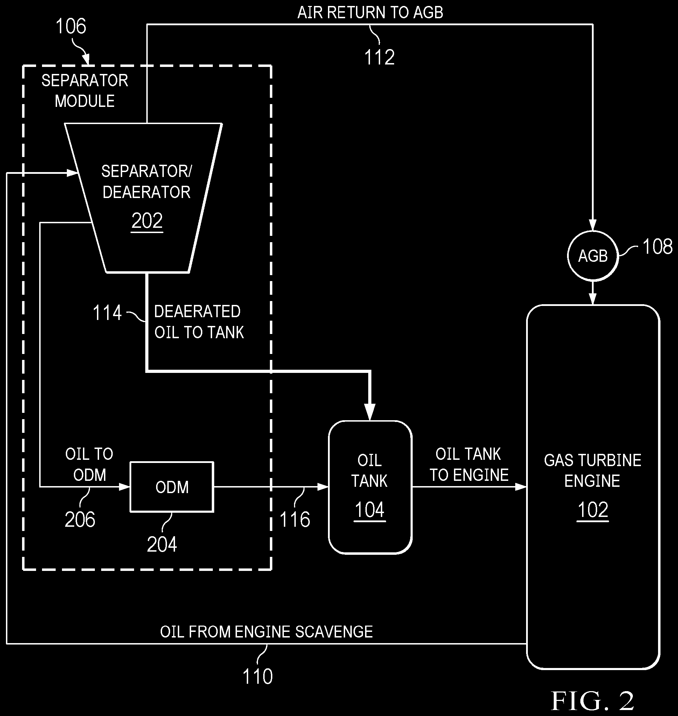

Referring now to Figure 2, there is illustrated a detailed block diagram more fully describing the separator module of Figure 1. As discussed previously, line 110 provides lubricating oil with particles suspended therein from the engine scavenge of the gas turbine engine to the separator module 106. Now more fully illustrated are the components included within the separator module 106 and more specifically to the separator/deaerator 202 and the ODM (oil debris monitor) sensor 204. The lubricating oil from line 110 is input to the separator/deaerator 202. The separator/deaerator 202 comprises a centrifuge that removes the particles contained within the lubricating oil received over line 110. The entry point of the input to the separator module 106 from line 110 is a critical parameter required for the centrifuging effect to enable enough pressure, flow energy and separating column height to separate particles from the lubricating oil. The separator/deaerator 202 additionally comprises a deaerator that removes air from the lubricating oil received over line 110 and transmits the air out from the separator/deaerator 202 over line 112.

The separator/deaerator 202 provides a first output to line 114 to provide deaerated lubricating oil directly to the oil tank 104 and a second output line 206 connected to an input of the ODM sensor 204. The output line 206 has a smaller diameter then output line 114 to provide a lower pressure flow but greater particle density through output line 206 than is provided through the pressure through line 114. This is to prevent the creation of back pressuring effects from adversely affecting other system components upstream from the ODM sensor 204. The ODM sensor 204 comprises a small bore debris monitoring sensor for sensing particles less than 280 µm. The lubricating oil that passes through the ODM sensor 204 after being analyzed to detect particle sizes therein passes out of the ODM sensor and on to the oil tank 104 through line 116.

The separator module 106 includes sensing capabilities for smaller particles via the ODM sensor 204 in a lower pressure lubricating oil flow of line 206 than that of line 114 after separation of particles within the separator/aerator 202. This enables the detection of the particles that are suspended in the lower pressure lubricating oil flow through line 206 and the ODM sensor 204 without the undesired effect of back pressuring critical system components. The separator module 106 enables a sufficient pressure differential to be established and maintained to ensure the adequate flow of particles through the separator/deaerator 202 and back to the oil tank 104.

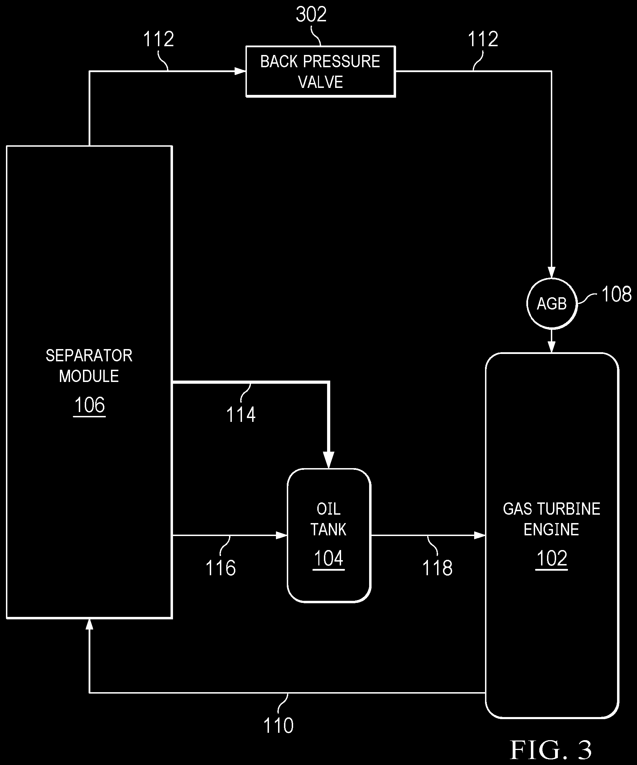

Figure 3 illustrates an alternative embodiment wherein a back pressure valve 302 is included with the implementation previously described with respect to Figure 1. In this embodiment, the gas turbine engine 102 again provides particle in a lubricating oil to the separator module 106 through line 110. The separator module 106 separate air and particles from the lubricating oil received over line 110 and provides the lubricating oil back to the oil tank 104 through lines 114 and 116 in the manner described previously with respect to Figures 1 and 2.

The air separated from the lubricating oil by the separator module 106 is output over line 112 but instead of being provided directly to the AGB 108 is provided through a back pressure valve 302 that helps maintain a back pressure within line 112 back towards the separator module 106 and other components.

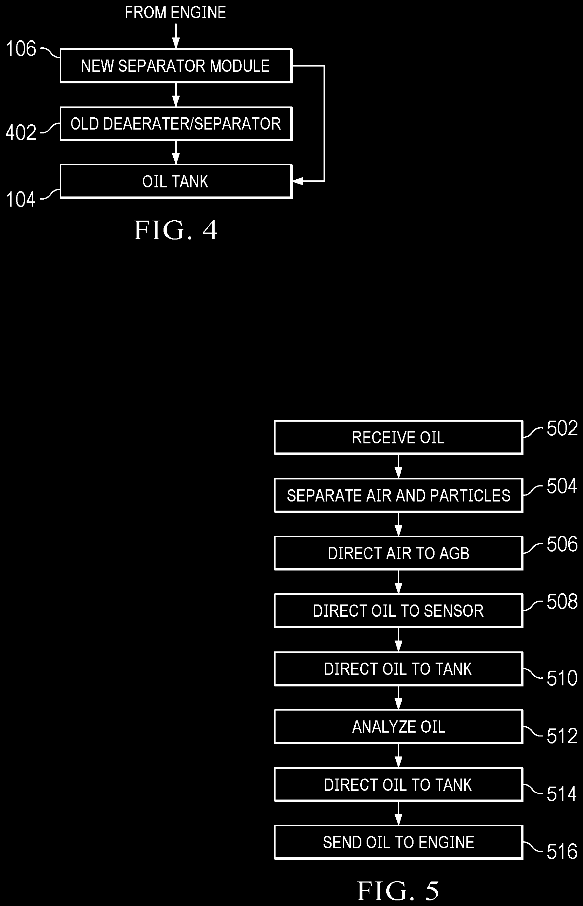

Figure 4 illustrates a block diagram of one implementation for installing the separator module 106 with an existing separator/deaerator. When a new separator module 106 including the integrated separator/deaerator 202 along with the ODM sensor 204 are installed within a new system, a number of options are possible. In the implementation illustrated in Figure 4, the new separator module 106 is installed between the output of line 110 from the gas turbine engine 102 and the input of the old separator/deaerator 402. The pressure drop values must be such that the system will enable the pressure drop across the new separator module 106 and the old separator/deaerator 402 to not exceed system design parameters for pressure drop. After passing the lubricating oil from the separator module 106 through the old separator/deaerator 402, the lubricating oil is provided to the oil tank 104.

Figure 5 illustrates a flow diagram of the operation of the system 100 of Figure 1. Lubricating oil is received at step 502 by the separator module 106 from the gas turbine engine 102. The separator module 106 separates at step 504 both the air and the particles from the received lubricating oil. The separated air is directed at step 506 to the AGB 108. The separated lubricating oil is directed at step 508 to the ODM sensor 204 thru a first line 206 , and the separated lubricating oil is also directed at step 510 the oil tank 104 thru line 114. The particle sizes within the lubricating fluid passing thru the ODM sensor 204 are detected at step 512. The analyzed lubricating oil is then directed at step 514 from the ODM sensor 204 to the oil tank 104. The oil tank 104 send sat step 512 lubricating oil to the gas turbine engine 102.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present invention should not be read as implying that any particular element, step, or function is an essential or critical element that must be included in the claim scope. The scope of patented subject matter is defined only by the allowed claims.

While this invention has described certain embodiments and generally associated methods, alterations and permutations of these embodiments and methods will be apparent to those skilled in the art. Accordingly, the above description of example embodiments does not define or constrain this invention. Other changes, substitutions, and alterations are also possible without departing from the spirit and scope of this invention, as defined by the following claims.

## Claims

1. An apparatus comprising:
a particle separator (106) configured to separate particles from lubricating oil on a gas turbine engine (102);
an oil debris monitor, ODM, sensor (204) integrated within the particle separator (106);
an input (110) to the particle separator (106) configured to connect the particle separator (106) to receive the lubricating oil from an engine oil scavenge sub-system (100) of the gas turbine engine (102);
a first output (114) from the particle separator (106) configured connect the particle separator (106) to provide the lubricating oil to an oil tank (104) associated with the gas turbine engine (102); and
a second output (116) from the particle separator configured to connect the particle separator (106) to provide the lubricating oil to the oil tank (104) associated with the gas turbine engine (102) from the ODM sensor (204), wherein in the second output (116) has a smaller diameter than the first output (114).

2. The apparatus of claim 1 further comprising a first output line (114) connected between the first output and the oil tank (104) associated with the gas turbine engine (102).

3. The apparatus of claim 2 further comprising a second output line (116) connected between the second output and the oil tank (104), wherein the second output line (116) has a diameter smaller than the first output line (114).

4. The apparatus of claim 3, wherein the diameter of the second output line (116) is configured so as to not cause unacceptable backflow pressure within the second output line (116).

5. The apparatus of any preceding claim, wherein the ODM sensor (204) comprises a small bore ODM sensor for detecting particles in a concentrated particle flow within the particle separator (106).

6. The apparatus of any preceding claim, wherein the particle separator (106) is installed retroactively with the gas turbine engine (102) and the oil tank (104) of the gas turbine engine (102).

7. The apparatus of any preceding claim, further comprising a third output (112) from the particle separator (106) configured connect the particle separator (106) to provide separated air to an auxiliary gear box (108) associated with the gas turbine engine (102).

8. A system (100) comprising:
a gas turbine engine (102) having an engine oil scavenge sub-system;
an oil tank (104) configured to store lubricating oil for the gas turbine engine (102);
an auxiliary gear box (108) associated with the gas turbine engine (102); and
the apparatus of any preceding claim, wherein the particle separator (106) is configured to separate particles from the lubricating oil of the gas turbine engine (102).

9. A method comprising:
connecting a particle separator (106) having an integrated oil debris monitor, ODM, sensor (204) to receive lubricating oil from an engine oil scavenge sub-system of a gas turbine engine (102);
connecting the particle separator (106) having the integrated ODM sensor (204) to provide the lubricating oil to an oil tank (104) associated with the gas turbine engine (102) using a first output (114); and
connecting the particle separator (106) to provide the lubricating oil to the oil tank (104) associated with the gas turbine engine (102) from the ODM sensor (204) using a second output (116), wherein in the second output (116) has a smaller diameter than the first output (114).

10. The method of claim 9 further comprising connecting a first output line (114) between the first output and the oil tank (104) associated with the gas turbine engine (102).

11. The method of claim 10 further comprising connecting a second output line (116) connected between the second output and the oil tank (104), wherein the second output line (116) has a diameter smaller than the first output line (114).

12. The method of claim 11, wherein the diameter of the second output line (116) does not cause unacceptable backflow pressure within the second output line (116).

13. The method of any of claims 9 to 12 further comprising installing the particle separator (106) with the gas turbine engine (102) and the oil tank (104) of the gas turbine engine (102).

14. The method of any of claims 9 to 13 further comprising connecting a third output (112) from the particle separator (106) to provide separated air to an auxiliary gear box (108) associated with the gas turbine engine (102).
